**Europäisches Patentamt**

**European Patent Office**

**Office européen des brevets**

(19)

(11) Veröffentlichungsnummer: **0 129 726**
**B1**

# (12) EUROPÄISCHE PATENTSCHRIFT

(45) Veröffentlichungstag der Patentschrift:
08.04.87

(21) Anmeldenummer: 84106026.2

(22) Anmeldetag: 26.05.84

(51) Int. Cl.⁴: **F 16 K 27/04, F 15 B 13/04**

(54) **Hydraulisches Wegeventil mit einem Gehäuse.**

(30) Priorität: 18.06.83 DE 3322018

(43) Veröffentlichungstag der Anmeldung:
02.01.85 Patentblatt 85/1

(45) Bekanntmachung des Hinweises auf die Patenterteilung:
08.04.87 Patentblatt 87/15

(84) Benannte Vertragsstaaten:
DE FR GB IT

(56) Entgegenhaltungen:
GB-A-1 122 219
US-A-3 804 116
US-A-3 818 936
US-A-3 967 640
US-A-4 375 226

(73) Patentinhaber: ROBERT BOSCH GMBH, Postfach
50, D-7000 Stuttgart 1 (DE)

(72) Erfinder: Olbrich, Gottfried, Dipl.- Ing., Bleiche 46,
D-7123 Sachsenheim 2 (DE)

## Beschreibung

Die Erfindung geht aus von einem hydraulischen Wegeventil mit einem Gehäuse nach der Gattung des Hauptanspruchs.

Aus der US-A-3 818 936 ist schon ein solches Wegeventil bekannt, bei dem im Gehäuse neben einem längsbeweglichen Kolbenschieber eine zweite Funktionsachse vorgesehen ist, die zwischen dem Kolbenschieber und den Anschlußbohrungen für den zu steuernden Hydromotor liegt. Unter Verwendung desselben Gehäuses können ausgehend von einer Grundausführung durch Einsetzen zusätzlicher, unterschiedlicher Ventile in die zweite Funktionsachse verschiedene Wegeventilvarianten für doppeltwirkende oder einfachwirkende Funktion hergestellt werden. Nachteilig bei diesem Wegeventil ist jedoch, daß die Ausführung sich nur für Sperrventile eignet, aber nicht auf eine Ausführung mit Schockventilen umstellbar ist. Zudem weist dieses Wegeventil in der zweiten Funktionsachse eine durchgehende Bohrung auf, in der die beweglichen Ventilkörper aufnehmende Ventileinsätze montierbar sind, was eine aufwendige Bauart ergibt. Auch liegen die Schieberbohrung mit der durchgehenden Bohrung verbindende Hohlräume in Schieberlängsrichtung gesehen jeweils in einigem Abstand von den Anschlußbohrungen, was für eine kompakte Ventilbauweise ungünstig ist.

Ferner ist aus der US-A- 3 804 116 ein Wegeventil bekannt, bei dem im Gehäuse neben einem längsbeweglichen Kolbenschieber eine zweite Funktionsachse vorgesehen ist, bei der zwei Ventilbohrungen zur Aufnahme von Zusatzventilen über einen Kanal miteinander verbunden sind. Unter Verwendung desselben Gehäuses können ausgehend von einer Grundausführung durch Einsetzen der zusätzlichen, unterschiedlichen Ventile in die zweite Funktionsachse verschiedene Wegeventilvarianten dargestellt werden. Dabei kann neben einer Ausführung mit Schockventilen auch eine solche mit Sperrventilen realisiert werden. Obwohl die verschiedenen Wegeventilvarianten ohne zusätzliche Bohrungsarbeit mit demselben Gehäuse darstellbar sind, hat das bekannte Wegeventil doch den Nachteil, daß es relativ aufwendig baut. So sind im Gehäuse dem Kolbenschieber neun Arbeitskammern zugeordnet und jede der beiden Ventilbohrungen in der zweiten Funktionsachse weist zwei außerhalb der Motorkammer liegende zusätzliche Hingkammern auf. Auch die Anordnung von zweiter Funktionsachse und Arbeitsanschlüssen auf einander gegenüberliegenden Seiten des Kolbenschiebers verursacht eine aufwendige Bauweise und führt zu langen Druckmittelwegen, welche den Durchflußwiderstand erhöhen können.

Vorteile der Erfindung

Das erfindungsgemäße Wegeventil mit den kennzeichnenden Merkmalen des Hauptanspruchs hat demgegenüber den Vorteil, daß bei ihm ausgehend von dem gleichen Grundgehäuse lediglich durch einfache Modifikation der Bearbeitung neben einer Grundausführung ohne zweite Funktionsachse bei einfacher und kompakter Bauweise auch verschiedene Wegeventilvarianten mit unterschiedlichen Zusatzventilen in der zweiten Funktionsachse darstellbar sind. Dabei kann aus demselben Gehäuseabguß durch leicht geänderte Zerspanungsarbeit neben einer Schockventilausführung auch eine Ausführung mit Sperrventilen hergestellt werden. Zudem baut das Wegeventil kompakt und erlaubt bei ausreichend großen Durchflußquerschnitten und relativ kurzen Druckmittelverbindungen geringe Durchflußwiderstände. Darüber hinaus lassen sich unabhängig von der Wegeventilvariante auch unterschiedliche Schaltungsarten wie Parallel -oder Sperrschaltung verwirklichen.

Durch die in den Unteransprüchen aufgeführten Maßnahmen sind vorteilhafte Weiterbildungen und Verbesserungen des im Hauptanspruch angegebenen Wegeventils möglich. Besonders vorteilhaft ist eine Ausführung gemäß Anspruch 12, wodurch sich die verschiedenen Varianten hinsichtlich zweiter Funktionsachse und Schaltungsart auch bei einer Links -und einer Rechtsausführung verwirklichen lassen. Weitere vorteilhafte Ausgestaltungen ergeben sich aus den übrigen Ansprüchen.

Zeichnung

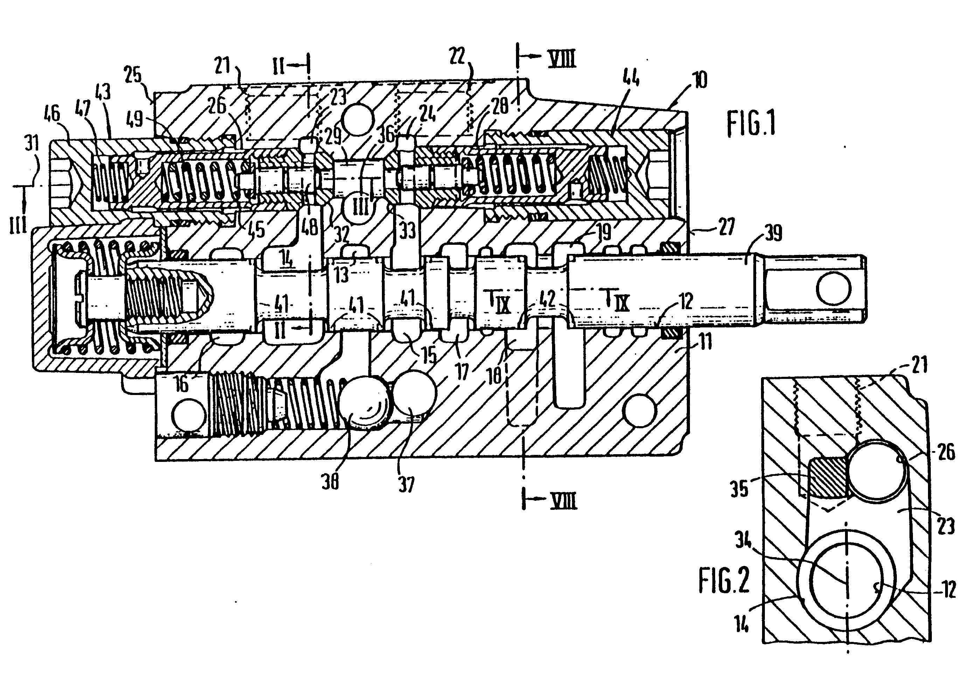

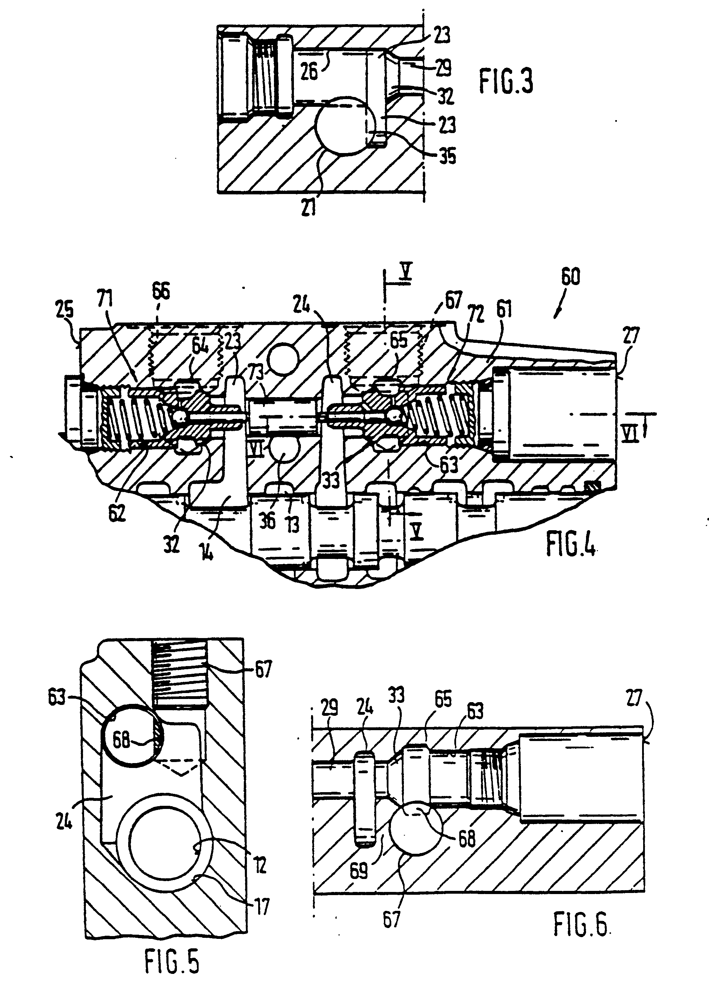

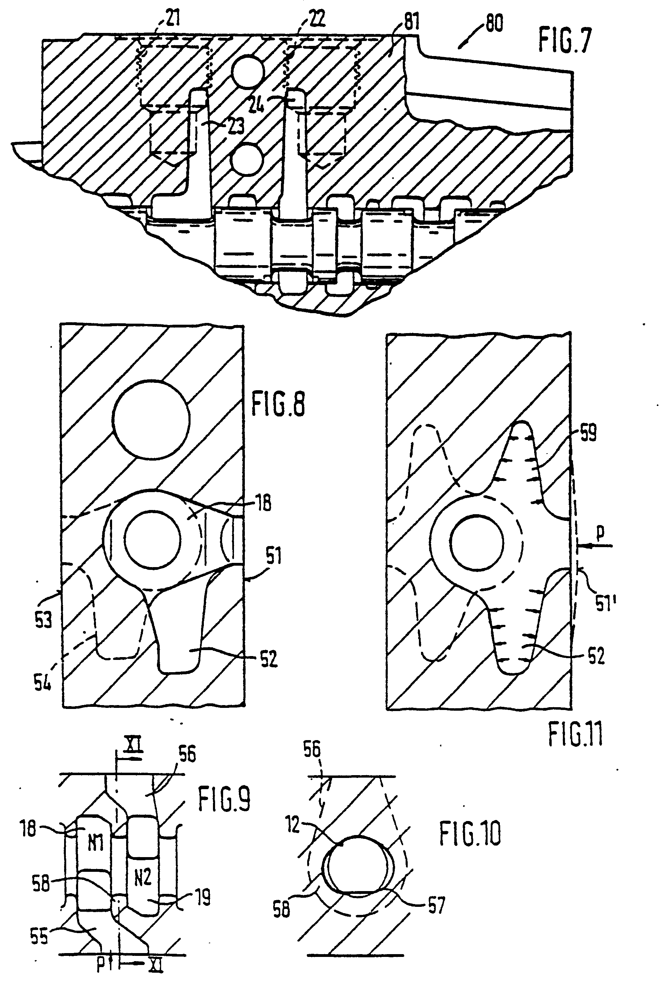

Drei Ausführungsbeispiele der Erfindung sind in der Zeichnung dargestellt und in der nachfolgenden Beschreibung näher erläutert. Es zeigen Figur 1 einen Längsschnitt durch ein erstes Ausführungsbeispiel, Figur 2 einen Schnitt nach II-II in Figur 1 lediglich durch einen Teil des Gehäuses, Figur 3 einen Schnitt nach III-III im Figur 1 durch einen Teil des Gehäuses, Figur 4 einen teilweisen Längsschmitt durch ein zweites Ausführungsbeispiel, die Figuren 5 und 6 jeweils Schnitte gemäß den Linien V-V bzw. VI-VI in Figur 4 jeweils durch einen Teil des Gehäuses, Figur 7 einen Längsschnitt durch einen Teil eines dritten Ausführungsbeispiels und Figur 8 einen Querschnitt nach VIII-VIII in Figur 1. Figur 9 zeigt einen Teilschnitt nach IX-IX in Figur 1 durch die Umlaufkammern, Figur 10 vereinfacht die Verformung des Gehäusestegs zwischen beiden Umlaufkammerp und Figur 11 einen Querschnitt nach XI-XI in Figur 9 mit Doppel-Taschen.

Beschreibung der Ausführungsbeispiele

Die Figur 1 zeigt ein erstes Wegeventil 10 in einer Schockventilausführung. Es hat ein Gehäuse 11 mit eimer durchgehenden Schieberbohrung 12, in der durch ringformige Erweiterungen in an sich bekannter Weise eine Zulaufkammer 13, eine erste (14) sowie eine zweite Motorkammer 15, eine erste (16) sowie eine zweite Rücklaufkammer 17 sowie eine erste (18) und eine zweite Umlaufkammer 19 angeordnet sind. Die beidem Umlaufkammern 18, 19 für einen nicht näher gezeichneten Neutralumlaufkanal liegen dabei außerhalb der übrigen fünf Arbeitskammern, bei denen die Zulaufkammer 13 mittig angeordnet ist.

Wie die Figur 1 in Verbindung mit Figur 2 und Figur 3 näher zeigt, sind von den beiden Motorkammern 14, 15 nach oben hin in Richtung zu Anschlußbohrungen 21, 22 laschenartige Hohlräume 23 bzw. 24 ausgebildet. Die Hohlräume 23, 24 sind in Längsrichtung der Schieberbohrung 12 gesehen relativ flach ausgebildet, während sie in Richtung quer zur Schieberbohrung 12 eine Tiefe aufweisen, die größer ist als der Durchmesser der Schieberbohrung 12. Wie die Figur 2 besonders deutlich zeigt, ist der Hohlraum 23 soweit hochgezogen, daß er eine von der linken Stirnseite 25 eingebrachte Ventilbohrung 26 umschließt. Entsprechendes gilt für den zweiten Hohlraum 24, der eine von der rechten Stirnseite 27 einnebrachte zweite Ventilbohrung 28 umschließt. Die beiden Ventilbohrungen 26, 28 liegen gleichachsig zueinander, sind an ihren inneren Enden durch einen Längskanal 29 miteinander verbunden und ermöglichen eine zweite Funktionsachse 31 im Gehäuse 11. Die Ventilbohrungen 26, 28 sind von den Stirnseiten 25 bzw. 27 jeweils so tief eingearbeitet, daß sie ihren zugeordneten Hohlraum 23 bzw. 24 durchdringen und unmittelbar angrenzend an diesen Hohlraum am Übergang in den Längskanal 29 jeweils einen Ventilsitz 32 bzw. 33 im Gehäuse 11 ausbilden.

Wie Figur 2 in Verbindung mit Figur 3 näher zeigt, sind die beiden Ventilbohrungen 26, 28 im Gehäuse 11, bezogen auf eine durch die Schieberbohrung 12 verlaufende Mittelebene 34, nach einer Seite hin versetzt angeordnet, während die Anschlußbohrungen 21, 22 bezogen auf dieselbe Mittelebene 34 nach der anderen Seite hin versetzt im Gehäuse liegen. Der axiale Abstand zwischen den beiden Anschlußbohrungen 21, 22 ist dabei so groß gewählt, daß die Anschlußbohrungen ihre zugeordneten Hohlräume 23, 24 an den den Stirnseiten 25, 27 zugewandten Seiten anschneiden und dabei Durchflußquerschnitte 35 bilden, wie sie in Figur 2 durch die schraffierte Fläche angedeutet sind. Der Durchflußquerschnitt 35 liegt somit im Gehäuse 11 in Höhe der Ventilbohrung 26, aber seitlich neben ihr. Um diesen Durchflußquerschnitt 35 zu ermöglichen, überlappen sich die in Figur 1 nach oben ragenden Hohlräume 23, 24 mit den von oben eingebrachten Anschlußbohrungen 21, 22 um eimen Betrag, der in etwa dem Durchmesser der Ventilbohrung 26 bzw. 28 entspricht. Von den in Ebenen senkrecht zur Schieberbohrung 12 verlaufenden Hohlräumen 23, 24 sind somit über die Durchflußquerschnitte 35 relativ kurze Druckmittelverbindungen zu den jeweiligen Anschlußbohrungen 21 und 22 hergestellt.

Im Gehäuse 11 ist ferner im Bereich zwischen den beiden Hohlräumen 23, 24, der Schieberbohrung 12 und dem Längskanal 29 ein beide Flanschflächen des Gehäuses 11 verbindender Querkanal 36 angeordnet, der den Längskanal 29 teilweise anschneidet. Unterhalb der Schieberbohrung 12 verläuft im Gehäuse 11 ein dessen beide Flanschflächen verbindender Zulaufkanal 37, der über ein Rückschlagventil 38 mit der Zulaufkammer 13 in Verbindung steht.

In der Schieberbohrung 12 ist ein längsbeweglicher Kolbenschieber 39 dicht und gleitend geführt, der mit seinen vier Steuerkanten 41 in üblicher Weise die Verbindung von der Zulaufkammer 13 zu einer der Anschlußbohrungen 21, 22 aufsteuert, während die andere Anschlußbohrung 22 bzw. 21 zu einem Rücklauf entlastet wird. Gleichzeitig beeinflußt er mit seinen zweiten Steuerkanten 42 die Verbindung zwischen beiden Umlaufkammern 18, 19.

Während der Kolbenschieber 39 im Wegeventil 10 die erste Funktionsachse bildet, sind in die Ventilbohrungen 26, 28 der zweiten Funktionsachse 31 an sich bekannte Schockventile 43, 44 eingebaut. Die beiden Schockventile 43, 44 sind untereinander gleich ausgebildet. Jedes Schockventil 43, 44 hat zur Durchführung der Nachsaugfunktion einen äußeren, ersten Ventilkörper 45, der in der ersten Ventilbohrung 26 sowie einer im Gehäuse 11 eingeschraubten Verschlußhülse 46 geführt ist und von einer zugeordneten ersten Feder 47 auf den ersten Ventilsitz 32 gedrückt wird. Der erste Ventilkörper 45 nimmt in seinem Innern einen zweiten Ventilkörper 48 mit zugeordneter Feder 49 auf, welche der Druckbegrenzungsfunktion zugeordnet sind.

Die Wirkungsweise des ersten Wegeventils 10 wird wie folgt erläutert, wobei auf dessen Funktion nur insoweit eingegangen wird, als zum Verständnis der Erfindung erforderlich ist. Dabei wird die reine Wegesteuerung des Wegeventils 10 sowie die grundsätzliche Funktion von Schockventilen als an sich bekannt vorausgesetzt.

Es sei davon ausgegangen, daß bei normaler Wegesteuerung ein Druckmittelstrom vom Zulaufkamal 37 über das Rückschlagventil 38, die Zulaufkammer 13 und die erste Motorkammer 14 in den ersten laschenartigen Hohlraum 23 gelangt und von dort über den Durchflußquerschnitt 35 ungehindert zur ersten Anschlußbohrung 21 strömen kann. Der erste Hohlraum ist dabei von den beiden Ventilkörpern 45 und 48 des ersten Schockventils 43 von dem Längskanal 29 und damit auch von dem mit dem Rücklauf verbundenen Querkanal 36 getrennt. Das in dem Hohlraum 23 ragende Schockventil 43 beeinträchtigt somit nicht den zum Motor hinfließenden Druckmittelstrom. Gleichzeitig kann ein vom angeschlossenen Motor zurückkommender Druckmittelstrom von der zweiten Anschlußbohrung 22 über den zugeordneten Durchflußquerschnitt 35 in den zweiten Hohlraum 24 gelangen und in bekannter Weise zur zweiten Rücklaufkammer 17 abströmen. Auch hierbei wird unter normalem Bedingungen der abfließende Druckmittelstrom von dem in den zweiten Hohlraum 24 ragenden Schockventil 44 nicht beeinträchtigt.

Verursacht bei der beschriebenen Richtungssteuerung die angeschlossene Last in der ersten Anschlußbohrung 21 eine Drucküberhöhung, so kann im ersten Schockventil 43 der zweite Ventilkörper 48 ansprechen und eine Verbindung vom Hohlraum 23 durch den ersten Ventilkörper 45 hindurch in den Längskanal 29 und damit zum Rücklauf öffnen. Entsteht bei diesen Bedingungen in der zweiten Anschlußbohrung 22 zugleich ein Unterdruck, so kann im zweiten Schockventil 44 der erste Ventilkörper 45 von seinem Sitz 33 abheben und Druckmittel aus dem Rücklauf 36 nachgesaugt werden.

Das Gehäuse 11 für das erste Wegeventil 10 mit Schockventilen 43, 44 in der zweiten Funktionsachse 31 läßt sich aus einem Grundgehäuse herstellen, das sich für verschiedene Wegeventiltypen eignet. Bei dem Grundgehäuse ist die Außenkontur und die Ausbildung des Kernes stets gleich; für die Verwendung als Gehäuse 11 für die Schockventilausführung werden lediglich durch einfache Bohrungsarbeiten die beiden Anschlußbohrungen 21, 22, sowie die Ventilbohrungen 26, 28 mit dem dazwischenliegenden Längskanal 29 in der in den Figuren 1 bis 3 gezeichneten Weise eingearbeitet. Damit werden die für eine Schockventilausführung notwendigen Druckmittelverbindungen hergestellt. Bei kompakter Bauweise des Gehäuses 11 ergeben sich relativ kurze Wege für die Druckmittelströme, was günstige Durchflußwerte ermöglicht.

Die Figur 4 zeigt einen teilweisem Längsschnitt durch ein zweites Wegeventil 60 in Sperrventilausführung. Das zweite Wegeventil 60 unterscheidet sich vom ersten Wegeventil nach Figur 1 wie folgt, wobei für gleiche Teile gleiche Bezugszeichen verwendet werden. Das zweite Wegeventil 60 hat ein anderes Gehäuse 61, das wie das Gehäuse 11 aus demselben gegossenen Grundgehäuse durch einfache Zerspanungsarbeit herstellbar ist. Beim Gehäuse 61 sind die beiden Ventilbohrungen 62 bzw. 63 von den Stirnseiten 25, 27 her weniger tief in das Gehäuse eingearbeitet. Auf diese Weise durchdringt der Längskanal 29 die beiden laschenartigen Hohlräume 23 und 24 und die Ventilsitze 32 bzw. 33 kommen im Abstand von den Hohlräumen 23 bzw. 24 zwischen letzteren und den zugeordneten Stirnseiten 25 bzw. 27 zu liegen. In jeder Ventilbohrung 62, 63 ist nach außen hin angrenzend an dem Ventilsitz 32 bzw. 33 eine Ringkammer 64 bzw. 65 ausgebildet. Der Durchmesser dieser Ringkammern 64, 65 ist nur geringfügig größer als derjenige der Ventilbohrungen. In derselben Querschnittsebene wie die Ringkammern 64, 65 liegen nun die Anschlußbohrungen 66 und 67. Beim Gehäuse 61 sind in gleicher Weise wie beim Gehäuse 11 die Anschlußbohrungen 66, 67 sowie die Ventilbohrungen 62, 63 in bezug auf eine Mittelebene durch die Schieberbohrung 12 nach entgegengesetzten Seiten hin versetzt angeordnet. Wie Figur 5 und 6 deutlicher zeigen, schneiden die Anschlußbohrungen 66, 67 die zugeordnete Ventilbohrung 62 bzw. 63 nunmehr in radialer Weise an und bilden dadurch einen Durchflußquerschnitt 68, wie er in Figur 5 durch die schraffierte Fläche angedeutet ist. Im Vergleich zum Gehäuse 11 nach Figur 1 ist beim Gehäuse 61 der Abstand zwischen den beiden Anschlußbohrumgen 66, 67 erheblich größer, so daß nun zwischen jedem Hohlraum 23, 24 und der zugeordneten Anschlußbohrung 66 bzw. 67 eine abdichtende Wand 69 stehen bleibt.

In die Ventilbohrungen 62, 63 der zweiten Funktionsachse 31 sind an sich bekannte Sperrventile 71, 72 in vorgesteuerter Bauweise eingesetzt, die von einem gemeinsamen Kolben 73 betätigbar sind. Der Kolben 73 ist in dem Längskanal 29 dicht und gleitend geführt und blockiert die Verbindungen zu dem mit dem Rücklauf verbundenen Querkanal 36. Die Wirkungsweise des zweiten Wegeventils 60 wird wie folgt erläutert, wobei die Funktionen der Richtungssteuerung und der vorgesteuerten Sperrventile 71, 72 als an sich bekannt vorausgesetzt wird.

Es sei wiederum davon ausgegangen, daß von der Zulaufkammer 13 ein Druckmittelstrom zur ersten Anschlußbohrung 66 gesteuert wird. Das hierbei in die erste Motorkammer 14 und damit in den Hohlraum 23 gelangende Druckmittel öffnet nun den Ventilkörper des Sperrventils 71 und fließt am Ventilsitz 32 vorbei in die erste Ringkammer 64, von der es über den Durchflußquerschnitt 68 in die erste Anschlußbohrung 66 gelangen kann. Der im ersten Hohlraum 23 vom Zulaufdruck beaufschlagte Kolben 73 entsperrt das andere Sperrventil 72, so daß von der zweiten Anschlußbohrung 67 auf dem entsprechenden Weg über die zweite Ringkammer 65, den Durchflußquerschnitt 68 vorbei am Ventilsitz 33 Druckmittel in den zweiten Hohlraum 24 und weiter zur zweiten Rücklaufkammern 17 strömen kann. Der Entsperrkolben 73 verhindert dabei zugleich, daß aus dem ersten Hohlraum 23 der Druck sich über den Querkanal 36 zum Tank abbauen kann.

Beim zweiten Wegeventil 60 erübrigt sich ein den Zulaufkanal 37 absicherndes Rückschlagventil 38. Die Querschnittsverringerung des mittigen Querkanals 36 durch den Entsperrkolben 73 beeinträchtigt die Gesamtfunktion des Wegeventils 60 nicht. Wird bei dem zweiten Wegeventil 60 nur eine einseitige Sperrventilanordnung benötigt, so kann bei Wegfall des zweiten Sperrventils 72 die zweite Anschlußbohrung 67 auch nach rechts zur Stirnseite 27 hin herausgeführt werden. Dadurch läßt sich die Leitungsführung und die Zugänglichkeit zu den Verbraucheranschlüssen bei besonderen Einsatzfällen verbessern.

Ausgehend von dem selben Grundgehäuse kann somit allein durch unterschiedliche Bearbeitung der versetzt zur Mittelebene angeordnete Anschlußbohrungen und Ventilbohrungem ein Gehäuse 61 erreicht werden, das in seiner zweiten Funktionsachse 31 Sperrventile 71, 72 aufnehmen kann.

Die Figur 7 zeigt einen teilweisen Längsschnitt durch ein drittes Wegeventil 80, das im Unterschied zu den Ventilen nach Figur 1 und 4 keine zweite Funktionsachse aufweist. Sein Gehäuse 81 läßt sich aus einem gegossenen Grundgehäuse sehr einfach dadurch herstellen, daß die beiden Anschlußbohrungen 21, 22 wie beim Gehäuse 11 angeordnet werden und damit die Verbindungen zu den Hohlräumen 23 bzw. 24 herstellen.

Die unterschiedlichen Wegeventilbauarten wie Schockventiltype, Sperrventiltype und Grundtype können somit aus demselben Abguß eines Grundgehäuses hergestellt werden, indem die unterschiedlichen Druckmittelverbindungem lediglich durch einfache Varianten in der Bearbeitung erzielbar sind. Alle Ventiltypen weisen infolge ihrer kompakten Bauweise auch kurze Druckmittelwege auf.

Bei allen diesen Wegeventiltypen sind auch weitere Varianten hinsichtlich Verschaltung und Bauform möglich. Dies wird wie folgt anhand von Figur 1 in Verbindung mit Figur 8 erläutert. Wie Figur 8 näher zeigt, ist die erste Umlaufkammer 18 zu einer ersten Flanschfläche 51 hin geöffnet und hat eine nach unten sich ausdehnende Tasche 52, die im Bereich zwischen Mittelebene des Gehäuses 11 und der Fianschfläche 51 liegt. Die zweite Umlaufkammer 19 ist zu einer zweiten Flanschfläche 53 hin geöffnet und hat eine entsprechende Tasche 54, die in bezug auf die Mittelebene entgegengesetzt zur Tasche 52 angeordnet ist. Mit Hilfe dieser gegensinnig aus der Mittelebene versetzt angeordneten Taschen 52, 54 können sowohl unterschiedliche Schaltungsvarianten als auch unterschiedliche Ausbildungsvarianten der Wegeventile realisiert werden.

So können die Wegeventile 10, 60, 80 in Parallelschaltung betrieben werden, wobei wie in Figur 1 dargestellt die dem Rückschlagventil 38 zugeordnete Bohrung in dem Zulaufkanal 37 endet und dieser Zulaufkanal 37 in an sich bekannter Weise in einer nicht näher gezeichneten Anschlußplatte mit einem über die Umlaufkammern 18, 19 führenden Neutralumlaufkanal in Verbindung steht. Soll anstelle der parallelen Schaltung eine Sperrschaltung verwirklicht werden, so wird die das Rückschlagventil 38 aufnehmende Bohrung über den Zulaufkanal 37 hinaus bis in eine der Taschen 52, 54 verlängert. In Figur 1 kann diese Verlängerung in die Tasche 52 münden, welche stromaufwärts vom Kolbenschieber 39 im Neutralumlaufkanal liegt. Auf diese Weise ist dann eine Sperrschaltung bei einem Wegeventil in sogenannter Linksausführung verwirklicht. Im Gegensatz zu der in Figur 1 gezeichneten Linksausführung kann das Wegeventil 10 auch für eine Rechtsausführung verwendet werden; bei einer Rechtsausführung ist dann die zweite Umlaufkammer 19 mit dem zulaufseitigen Abschnitt dea Neutralumlaufkanals verbunden, so daß zur Verwirklichung einer Sperrschaltung die dem Rückschlagventil 38 zugeordnete Bohrung über dem Zulaufkanal 37 hinaus in die zweite Tasche 54 geführt werden muß.

Durch die gegensinnig zur Mittelebene versetzten Taschen 52, 54 kann die dem Rückschlagventil 38 zugeordnete und über den Zulaufkanal 37 hinaus verlängerte Bohrung von der Mittelebene zur zweiten Stirnfläche 53 hin versetzt angeordnet werden, so daß sie die Tasche 52 nicht anschneidet und nur eine Verbindung zu der Tasche 54 herstellt.

Auf diese Weise können unterschiedliche Wegeventiltypen mit unterschiedlichen Schaltungsarten und für Links- und Rechtsausführung aus demselben gegossenen Grundgehäuse hergestellt werden.

Selbstverständlich sind Änderungen an den gezeigten Ausführungsformen möglich, ohne vom Gedanken der Erfindung abzuweichen, insbesondere ist es möglich die Taschen 52, 54 im Neutralumlaufbereich und deren Verschaltungstechnik bei Wegeventilen auch ohne zweite Funktionsachse vorteilhaft zunützen.

Zusätzlich zu den Vorteilen der Verschaltungstechnik durch die Taschen 52, 54 ergibt sich durch diese darüber hinaus eine reduzierte Klemmneigung des Schiebers im Neutralumlaufbereich.

Durch die Kröpfung der mit den Umlaufkammern 18, 19 verbundenen Kanäle 55 und 56, siehe hierzu Figur 9, ergibt sich eine Einbeulung 57 der Schieberbohrung 12 im Bereich des Gehäusesteges 58 bei einseitigem Druck z.B. im Kanal 55 (Neutralumlauf gesperrt) entsprechend Figur 10, da der Zulaufdruck den gekröpften Wandbereich des Gehäusesteges 58 nach innen zu drücken versucht. Diese Einbeulung erhöht prinzipiell die Klemmgefahr des Schiebers 39.

Dieser Effekt kann kompensiert werden, wenn der Neutralumlaufbereich mit Taschen 52, 54 versehen wird. Diese können als Doppeltaschen 59 nach Figur 11 nach oben und unten, oder nur in einer Richtung nach Figur 8 ausgebildet sein. Diese Taschen sind zweckmäßigerweise aus der Mitte zur jeweiligen Zulauföffnung hin versetzt und haben ihre Hauptwirklinie im Bereich der Einbeulung 57. Unter Wirkung des einseitigen Drucks (z.B. im Kanal 55) wird durch diese Taschen 52, 59 das Gehäuse in Querrichtung gespreizt, wie dies Figur 11 in übertriebener Weise durch die gestrichelte Flanschplatte 51' darstellt, und damit die Einbeulung 57 im Gehäusesteg 58 zwischen den Umlaufkammern 18, 19 aufgehoben.

Diese mit Hilfe der Taschen bei gekröpft geführten Neutralumlaufkanälen verhinderte Klemmwirkung ist sowohl bei Rechts- wie auch Linksausführung möglich und auch infolge ihrer Einfachheit besonders vorteilhaft. Selbstverständlich ist diese Kompensation der Klemmwirkung bei einem Wegeventil unabhängig von dessen sonstiger Ausgestaltung, wie z.B. zweite Funktionsachse, mit oder ohne Zusatzventile, erzielbar und ohne weiteres bei anderen Wegeventilen mit gekröpften Umlaufkanal anwendbar.

**Patentansprüche**

1. Hydraulisches Wegeventil (10, 60) mit einem Gehäuse (11, 61), das eine Schieberbohrung (12) zur Aufnahme eines längsbeweglichen Kolbenschiebers (39) aufweist und in dieser Schieberbohrung (12) zwei Motorkammern (14, 15) hat, die zwischen sich wenigstens eine Zulaufkammer (13) einschließen, und mit Hohlräumen (23, 24), welche von der Schieberbohrung (12) ausgehen und eine zweite, zur Schieberbohrung parallel verlaufende Funktionsachse (31) durchdringen, die durch zwei Ventilbohrungen (26, 28; 62, 63) zur Aufnahme von Zusatzventilen (43, 44; 71, 72) gebildet wird, welche Ventilbohrungen (26, 28; 62, 63) ein Kanal (29) miteinander verbindet sowie mit jeweils einer, den Motorkammern (14, 15) zugeordneten Anschlußbohrung (21, 22; 66, 67) und bei dem die zweite Funktionsachse (31) im Gehäuse (11, 61) zwischen der Schieberbohrung (12) und den Anschlußbohrungen (21, 22; 66, 67) liegt, und jede Anschlußbohrung (21, 22; 66, 67) die ihr zugeordnete Ventilbohrung (26, 28; 62, 63) anschneidet, dadurch gekennzeichnet, daß die Ventilbohrungen (26, 28; 62, 63) nach der einen Seite hin außerhalb einer Mittelebene (34) durch die Schieberbohrung (12) versetzt angeordnet sind, daß die Hohlräume (23, 24) laschenartig von den Motorkammern (14, 15) ausgehen und im Bereich der zweiten Funktionsachse (31) in Richtung quer zur Schieberbohrung (12) so breit ausgeführt sind, daß sie die Ventilbohrungen (26, 62; 28, 63) in Längsrichtung gesehen umschließen und in den Bereich der Anschlußbohrungen (21, 66; 22, 67) ragen und daß ein am Übergang von Ventilbohrung (26, 62; 28, 63) in den Kanal (29) ausgebildeter Ventilsitz (32, 33) durch unterschiedliche Bearbeitungstiefe der Ventilbohrungen (26, 62; 28, 63) wahlweise vor bzw. hinter den laschenförmigen Hohlraum (23, 24) legbar ist und daß durch unterschiedlichen Abstand der Anschlußbohrung (21, 66; 22, 67) von dem laschenartigen Hohlraum (23, 24) wahlweise ein Anschnitt (35) zwischen Anschlußbohrung (21, 22) und Hohlraum (23, 24) bzw. ein Anschnitt (68) zwischen Anschlußbohrung (66, 67) und Ventilbohrung (62, 63) herstellbar ist.

2. Wegeventil nach Anspruch 1, dadurch gekennzeichnet, daß in wenigstens einer Ventilbohrung (26) ein Ventilsitz (32) von der zugehörigen Stirnseite (25) des Gehäuses (11) aus gesehen hinter dem laschenförmigen Hohlraum (23) liegt und die zugeordnete Anschlußbohrung (21) den Hohlraum (23) in Höhe der Ventilbohrung (26) axial anschneidet.

3. Wegeventil nach Anspruch 2, dadurch gekennzeichnet, daß die Ventilbohrung (26) ein Schockventil (43) aufnimmt.

4. Wegeventil nach Anspruch 1, dadurch gekennzeichnet, daß in wenigstens einer Ventilbohrung (62) ein Ventilsitz (32) von der zugehörigen Stirnseite (25) des Gehäuses (61) aus gesehen vor und im Abstand von dem laschenförmigen Hohlraum (23) angeordnet ist und die zugeordnete Anschlußbohrung (66) im Abstand zum Hohlraum (23) verläuft und die Ventilbohrung (62) radial anschneidet.

5. Wegeventil nach Anspruch 4, dadurch gekennzeichnet, daß die Ventilbohrung (62) unmittelbar vor dem Ventilsitz (32) eine Ringkammer (64) aufweist, welche von der Anschlußbohrung (66) angeschnitten wird.

6. Wegeventil nach Anspruch 4 oder 5, dadurch gekennzeichnet, daß die Ventilbohrung (62) ein Sperrventil (71) aufnimmt.

7. Wegeventil nach einem der Ansprüche 1 bis 6, dadurch gekennzeichnet, daß der zwischen beiden Ventilbohrungen (26, 28; 62, 63) verlaufende Kanal (29) einen Querkanal (36) tangiert.

8. Wegeventil nach einem der Ansprüche 1 bis 7, dadurch gekennzeichnet, daß die laschenartigen Hohlräume (23, 24) im wesentlichen senkrecht zur Schieberbohrung (12) und zueinander parallel verlaufen.

9. Wegeventil nach einem der Ansprüche 1 bis 8, dadurch gekennzeichnet, daß beide Hohlräume (23, 24) in Längsrichtung des Kolbenschiebers (39) gesehen zwischen beiden Anschlußbohrungen (21, 22) liegen.

10. Wegeventil nach Anspruch 1, 8 oder 9, dadurch gekennzeichnet, daß im Längsschnitt des Gehäuses (11, 61) gesehen sich die Hohlräume (23, 24) und die Anschlußbohrungen (21, 22; 66, 67) etwa um den Durchmesser der Ventilbohrungen (26, 62) überlappen.

11. Wegeventil nach einem der Ansprüche 1 bis 10, dadurch gekennzeichnet, daß die Anschlußbohrungen (21, 22; 66, 67) nach der anderen Seite hin außerhalb der Mittelebene (34) versetzt angeordnet sind.

12. Wegeventil nach einem der Ansprüche 1 bis 11, mit zwei nebeneinanderliegenden, in einen Neutralumlauf geschalteten Umlaufkammern, dadurch gekennzeichnet, daß von beiden Umlaufkammern (52, 54) zur Mittelebene (34) durch die Schieberbohrung (12) gegensinnig versetzt angeordnete Taschen (52, 54) ausgehen.

13. Wegeventil nach Anspruch 12, dadurch gekennzeichnet, daß die Taschen (52, 54) in bezug auf die Schieberbohrung (12) entgegengesetzt zu den laschenartigen Hohlräumen (23, 24) verlaufen.

14. Wegeventil nach Anspruch 12 oder 13, dadurch gekennzeichnet, daß jede Tasche (52, 54) im Bereich zwischen der der jeweiligen Umlaufkammer (18, 19) in der Flanschfläche zugeordneten Öffnung und der Längsachse der Schieberbohrung (12) angeordnet ist.

15. Wegeventil nach einem der Ansprüche 12 bis 14, dadurch gekennzeichnet, daß jeder Tasche (52, 54) eine Doppel-Tasche (59) gegenüberliegt.

16. Wegeventil nach einem der Ansprüche 12 bis 15, dadurch gekennzeichnet, daß zur Erzielung einer Sperrschaltung wahlweise eine der Taschen (52, 54) über eine Bohrung mit dem Zulaufkanal (37) verbunden ist.


**Claims**

1. Hydraulic directional valve (10, 60) with a housing (11, 61) which possesses a slide bore (12) for receiving a longitudinally movable piston slide (39) and which has, in this slide bore (12), two motor chambers (14, 15) which include between them at least one inflow chamber (13), and with cavities (23, 24) which start from the slide bore (12) and which pass through a second functional axis (31) extending parallel to the slide bore and formed by two valve bores (26, 28; 62, 63) for receiving auxiliary valves (43, 44; 71, 72), the said valve bores (26, 28; 62, 63) being connected to one another by means of a channel (29), and with a connecting bore (21, 22; 66, 67) assigned to each of the motor chambers (14, 15), the second functional axis (31) in the said directional valve being located in the housing (11, 61) between the slide bore (12) and the connecting bores (21, 22; 66, 67), and each connecting bore (21, 22; 66, 67) intersecting the valve bore (26, 28; 62, 63) assigned to it, characterized in that the valve bores (26, 28; 62, 63) are arranged offset to one side outside a mid-plane (34) through the slide bore (12), in that the cavities (23, 24) extend in the manner of lobes from the motor chambers (14, 15) and, in the region of the second functional axis (31), are made so wide in a direction transverse to the slide bore (12) that they surround the valve bores (26, 62; 28, 63), as seen in the longitudinal direction, and project into the region of the connecting bores (21, 66; 22, 67), in that a valve seat (32, 33) formed at the transition from the valve bore (26, 62; 28, 63) to the channel (29) can be placed selectively either in front of or behind the lobe-shaped cavity (23, 24) as a result of a differing machining depth of the valve bores (26, 62; 28, 63), and in that an intersection (35) between the connecting bore (21, 22) and the cavity (23, 24) or an inter section (68) between the connecting bore (66, 67) and the valve bore (62, 63) can be made selectively as a result of a differing distance between the connecting bore (21, 66; 22, 67) and the lobelike cavity (23, 24).

2. Directional valve according to Claim 1, characterized in that, in at least one valve bore (26), a valve seat (32) is located behind the lobe-shaped cavity (23), as seen from the associated end face (25) of the housing (11), and the associated connecting bore (21) intersects the cavity (23) axially at the height of the valve bore (26).

3. Directional valve according to Claim 2, characterized in that the valve bore (26) receives a shock valve (43).

4. Directional valve according to Claim 1, characterized in that, in at least one valve bore (62), a valve seat (32) is arranged in front of and at a distance from the lobe-shaped cavity (23), as seen from the associated end face (25) of the housing (61), and the associated connecting bore (66) extends at a distance from the cavity (23) and intersects the valve bore (62) radially.

5. Directional valve according to Claim 4, characterized in that the valve bore (62) has, immediately in front of the valve seat (32), an annular chamber (64) which is intersected by the connecting bore (66).

6. Directional valve according to Claim 4 or 5, characterized in that the valve bore (62) receives a stop valve (71).

7. Directional valve according to one of Claims 1 to 6, characterized in that the channel (29) extending between the two valve bores (26, 28; 62, 63) touches a transverse channel (36).

8. Directional valve according to one of Claims 1 to 7, characterized in that the lobe-like cavities (23, 24) extend essentially perpendicular to the slide bore (12) and parallel to one another.

9. Directional valve according to one of Claims 1 to 8, characterized in that the two cavities (23, 24) are located between the two connecting bores (21, 22), as seen in the longitudinal direction of the piston slide (39).

10. Directional valve according to Claim 1, 8 or 9, characterized in that, as seen in a longitudinal section through the housing (11, 61), the cavities (23, 24) and the connecting bores (21, 22; 66, 67) overlap one another approximately by the amount of the diameter of the valve bores (26, 62).

11. Directional valve according to one of Claims 1 to 10, characterized in that the connecting bores (21, 22; 66, 67) are arranged offset to the other side outside the mid-plane (34).

12. Directional valve according to one of Claims 1 to 11, with two circulation chambers located next to one another and connected to form a neutral circulation system, characterized in that pockets (52, 54) arranged offset in opposite directions extend from the two circulation chambers (52, 54) to the mid-plane (34) through the slide bore (12).

13. Directional valve according to Claim 12, characterized in that the pockets (52, 54) extend in the opposite direction to the lobe-like cavities (23, 24) in relation to the slide bore (12).

14. Directional valve according to Claim 12 or 13, characterized in that each pocket (52, 54) is arranged in the region between the orifice assigned to the particular circulation chamber (18, 19) in the flange surface and the longitudinal axis of the slide bore (12).

15. Directional valve according to one of Claims 12 to 14, characterized in that a double pocket (59) is located opposite each pocket (52, 54).

16. Directional valve according to one of Claims 12 to 15, characterized in that, to obtain a stopping action, one of the pockets (52, 54) is connected selectively to the inflow channel (37) via a bore.

## Revendications

1°) Soupape hydraulique de commande (10, 60) pourvue d'un carter (11, 61) qui présente un alésage de coulissement (12) pour recevoir un coulisseau à piston (39) mobile en direction longitudinale et comporte, dans cet alésage de coulissement (12), deux chambres de moteur (14, 15) enfermant entre elles au moins une chambre d'amenée (13), et pourvue de cavités (23, 24) qui partent de l'alésage de coulissement (12) et traversent un second axe de fonctionnement (31) s'étendant parallèlement à l'alésage de coulissement et qui est formé par deux alésages de soupape (26, 28; 62, 63) pour recevoir des soupapes auxiliaires (43, 44; 71, 72), alésages de soupape (26, 28; 62, 63) que relie l'un à l'autre un canal (29), pourvu également d'alésages de raccordement (21, 22; 66, 67) associés chacun à l'une des chambres de moteur (14, 15), et le second axe de fonctionnement (31) est situé dans le carter (11, 61) entre l'alésage de coulissement (12) et les alésages de raccordement (21, 22; 66, 67), et chaque alésage de raccordement (21, 22; 66, 67) coupe l'alésage de soupape (26, 28; 62, 63) qui lui est associé, soupape hydraulique de commande caractérisée en ce que les alésages de soupape (26, 28; 62, 63) sont disposés décalés vers l'un des côtés en-dehors d'un plan médian (34) passant par l'alésage de coulissement (T2), en ce que les cavités (23, 24) partent en forme d'éclisses des chambres de moteur (14, 15) et, dans la zone du second axe de fonctionnement (31) en direction transversale par rapport à l'alésage de coulissement (12), sont réalisées assez larges pour que, vues en direction longitudinale, elles entourent les alésages de soupape (26, 62; 28, 63) et pénètrent dans la zone des alésages de raccordement (21, 66; 22, 67), et un siège de soupape (32, 33) constitué à l'endroit du passage de l'alésage de soupape (26, 62; 28, 63) dans le canal (29) peut, par suite de profondeurs d'usinage différentes des alésages de soupape (26, 62; 28, 63), se trouver placé au choix en avant ou en arrière de la cavité (23, 24) en forme d'éclisse, et en ce que grâce à des différences de distance de l'alésage de raccordement (21, 66; 22, 67) à la cavité (23, 24) en forme d'éclisse, peut être réalisée au choix une coupure (35) entre alesage de raccordement (21, 22) et cavité (23, 24) ou une coupure (68) entre alésage de raccordement (66, 67) et alésage de soupape (62, 63).

2°) Soupape de commande selon la revendication 1, caractérisée en ce que, dans au moins un alésage de soupape (26), un siège de soupape (32), vu depuis la face frontale correspondante (25) du carter (11) est situé derrière la cavité (23) en forme d'éclisse, et l'alésage de raccordement (21) afférent recoupe axialement la cavité (23) au niveau de l'alésage de soupape (26).

3°) Soupape de commande selon la revendication 2, caractérisée en ce que l'alésage de soupape (26) reçoit une soupape de choc (43).

4°) Soupape de commande selon la revendication 1, caractérisée en ce que, dans au moins un alésage de soupape (62), un siège de soupape (32), vu depuis la face frontale correspondante (25) du carter (61) est disposé en avant et à distance de la cavité (23) en forme d'éclisse, et l'alésage de raccordement (66) afférent s'étend a distance de la cavité (23) et recoupe radialement l'alésage de soupape (62).

5°) Soupape de commande selon la revendication 4, caractérisée en ce que l'alésage de soupape (62) comporte, directement en avant du siège de soupape (32), une chambre annulaire (64), qui est recoupée par l'alésage de raccordement (66).

6°) Soupape de commande selon la revendication 4 ou 5, caractérisée en ce que l'alésage de soupape (62) reçoit une soupape d'arrét (71).

7°) Soupape de commande selon l'une des revendications 1 à 6, caractérisée en ce que le canal (29) s'étendant entre les deux alésages de soupape (26, 28; 62, 63) est tangent à un canal transversal (36).

8°) Soupape de commande selon l'une des revendications 1 à 7, caractérisée en ce que les cavités (23, 24) en forme d'éclisses s'étendent essentiellement perpendiculairement à l'alésage de coulissement (12) et parallèlement l'une à l'autre.

9°) Soupape de commande selon l'une des revendications 1 à 8, caractérisée en ce que les deux cavités (23, 24), vues en direction longitudinale du coulisseau à piston (39), sont situées entre les deux alésages de raccordement (21, 22).

10°) Soupape de commande selon la revendication 1, 8 ou 9, caractérisée en ce que, vues en coupe longitudinale du carter (11, 61), les cavités (23, 24) et les alésages de raccordement (21, 22; 66, 67) se recouvrent d'à peu près le diamètre des alésages de soupape (26, 62).

11°) Soupape de commande selon l'une des revendications 1 à 10, caractérisée en ce que les alésages de raccordement (21, 22; 66, 67) sont disposés décalés vers l'autre côté en-dehors du plan médian (34).

12°) Soupape de commande selon l'une des revendications 1 à 11, comportant deux chambres de circulation situées à côté l'une de l'autre, montées en une circulation neutre, caractérisée en ce que des deux chambres de circulation (18, 19) partent des poches (52, 54) disposées décalées en sens inverse par rapport au plan médian (34) de l'alésage de coulissement (12).

13°) Soupape de commande selon la revendication 12, caractérisée en ce que les poches (52, 54) s'étendent, par rapport à l'alésage de coulissement (12), à l'opposé des cavités (23, 24) en forme d'éclisses.

14°) Soupape de commande selon la revendication 12 ou 13, caractérisée en ce que chaque poche (52, 54) est ménagée dans la zone située entre l'orifice associé dans la surface de bride à la chambre de circulation respective (18, 19) et l'axe longitudinal de l'alésage de coulissement (12).

15°) Soupape de commande selon l'une des revendications 12 à 14, caractérisée en ce que, à chaque poche (52, 54), fait face une double poche (59).

16°) Soupape de commande selon l'une des revendications 12 à 15, caractérisée en ce que, pour obtenir un circuit de blocage, l'une des poches (52, 54) au choix est reliée par l'intermédiaire d'un alésage au canal d'amenée (37).

FIG.1

FIG.2

FIG.3

FIG.4

FIG.5

FIG.6

FIG.7

FIG.8

FIG.11

FIG.9

FIG.10